# EUROPÄISCHE PATENTSCHRIFT

(11) **EP 3 004 242 B1**
(45) Veröffentlichungstag und Bekanntmachung des Hinweises auf die Patenterteilung: **30.08.2017**
(21) Anmeldenummer: 14730092.5
(22) Anmeldetag: 27.05.2014
(51) Int. Cl.: C08L 67/02, C08L 67/03

(54) **POLYESTERFORMMASSEN MIT GERINGER TOC EMISSION**
POLYESTER MOULDING COMPOSITIONS WITH LOW TOC EMISSION
MASSES DE MOULAGE EN POLYESTER AVEC FAIBLE ÉMISSION DE TOC

(30) Priorität: 07.06.2013 EP 13170969
(43) Veröffentlichungstag der Anmeldung: 13.04.2016
(73) Patentinhaber: BASF SE, 67056 Ludwigshafen am Rhein (DE)
(72) Erfinder: MÖLLER, Anna Karina, 64295 Darmstadt (DE); KNIESEL, Simon, 69469 Weinheim (DE)
(74) Vertreter: BASF IP Association
(86) Internationale Anmeldenummer: PCT/EP2014/060877
(87) Internationale Veröffentlichungsnummer: WO 2014/195176

(56) Entgegenhaltungen:
- DE-A1-102009 020 211

## Beschreibung

Die Erfindung betrifft thermoplastische Formmassen, enthaltend

| | |
|---|---|
| A) 30 bis 99,99 Gew.-% | eines Polyesters, aufgebaut aus 50 bis 100 Gew.-% mindestens eines Polyalkylenterephthalates A1), bezogen auf A) und 0 bis 50 Gew.-% eines Polyesters A2), verschieden von A1, |
| B) 0,01 bis 2 Gew.-% | eines Acrylsäurepolymeren, aufgebaut aus |
| | |
| B1) 70 bis 100 Gew.-% | Acrylsäure |
| B2) 0 bis 30 Gew.-% | mindestens eines anderen mit Acrylsäure copolymerisierbaren ethylenisch ungesättigten Monomeren, ausgewählt aus der Gruppe der monoethylenisch ungesättigten Carbonsäuren, |
| | |
| C) 0 bis 70 Gew.-% | weiterer Zusatzstoffe, |

wobei die Summe der Gewichtsprozente der Komponenten A) bis C) 100 % ergibt.

Weiterhin betrifft die Erfindung die Verwendung der erfindungsgemäßen Formmassen zur Herstellung von Formkörpern jeglicher Art, insbesondere mit einer TOC-Emission kleiner/gleich 100 ppm und die hierbei erhältlichen Formkörper, vorzugsweise mit einer TOC Emission von kleiner/gleich 100 ppm.

Polyester, insbesondere Polyalkylenterephthalate oder Polymere mit solchen Einheiten oder auch Blends mit derartigen Polyalkylenterephthalaten werden durch Polymerisation der entsprechenden Monomere beispielsweise in Gegenwart eines Titan-Katalysators hergestellt. Der (Titan-) Katalysator liegt nach der abschlossenen Polymerisation noch reaktiv im System vor und kann daher bei einer sich anschließenden Verarbeitung des Polymers (besonders im geschmolzenen Zustand, wie z.B. bei Extrusion oder Spritzguss) das Polymer zu gasförmigen oder sublimierenden Produkten zersetzen. Derartige Depolymerisationsprozesse erfolgen insbesondere dann, wenn Polyester lange in der Schmelze gehalten werden oder unter extremen Bedingungen (hoher Temperatur, hoher Druck, hohe Scherung o.ä.) verarbeitet werden. Sofern die Zersetzungsprodukte nicht sofort emittiert werden, können sie auch im PBT gespeichert werden und zu einem späteren Zeitpunkt abgegeben werden. So können z.B. Granulate oder spritzgegossene PBT-Formkörper organische Verbindungen emittieren, wenn sie bei erhöhter Temperatur verwendet werden. Dies ist bei vielen E&E-Anwendungen der Fall, in denen Polyester in Relais, Schaltern, Steckern eingesetzt werden, außerdem bei Anwendungen im Automobil-Innenraum, oder bei Lebensmittel- oder Kosmetikverpackungen. Für viele Anwendungen sollte die Emission der Zersetzungsprodukte reduziert werden, denn die emittierten Verbindungen können zu Geruchsbelästigungen oder Geschmacksveränderungen führen und sind unter Umständen reizend oder gesundheitsschädlich. Besonders für die Verwendung im AutomobilInnenraum oder in Kontakt mit Lebensmitteln gibt es strenge Richtlinien. Die emittierten Produkte sind meistens flüchtige organische Verbindungen VOC (= volatile organic compounds), insbesondere Tetrahydrofuran (THF) zu 98 % sowie Butadien, Acetaldehyd, Furan, Acrolein, Methanol, 1-Buten-4-ol und weitere THF Derivate.

Zur Verringerung der Emission aus Polyestern wurden im Stand der Technik folgende Additive verwendet:
EP-A 683 201 Zugabe einer Sulfonsäurekomponente bei der Polymerisation, welche als gesundheitsgefährdend bis krebserregend eingestuft werden.
US 2007/225475 Zugabe einer P-haltigen Komponente zur Desaktivierung des Titan-Katalysators. Die hier angegebenen Werte der Emission sind prozentual, d.h. keine Absolutwerte und sind verbesserungswürdig.
EP-A-2427 511 Zugabe eines Kettenverlängerers auf Basis eines epoxidierten Styrol-Acryl-Polymers, welches auch zu einem unerwünschten Molgewichtsaufbau führt, jedoch können Oligomere oder Lösungsmittelreste damit verringert werden.
US 6114495 Zugabe von Polyacrylsäure zu Polyestern auf Basis von Milchsäure bei der Polymerisation zur Deaktivierung der Sn - oder Sb-Katalysatoren.

Aus der DE-A 102009020211 ist die Zugabe eines Styrol-Acryl-Polymers (z.B. Joncry®) bekannt, welches in Konzentrationen von 0,01 bis 2 % eingesetzt wird, um in PBT den Gehalt an extrahierbaren Verbindungen zu reduzieren.

Joncryl®ADR-4368 ist ein fester, oligomerer Kettenverlängerer auf Basis eines epoxyfunktionalisierten Styrol-Acrylsäure-Polymers. Das Polymer ist reaktiv in Polyestern und wird üblicherweise eingesetzt, um das Molekulargewicht von Polymeren und damit die intrinsische Viskosität und Schmelzeviskosität der Polymere zu erhöhen.

Die Verwendung von epoxidierten Styrol-Acrylsäure-Copolymere führt jedoch zu einer Kettenverlängerung und Erhöhung des Molekulargewichts. Die Erhöhung des Molekulargewichts ist mit einem Anstieg der Schmelzeviskosität bzw. mit einer Verringerung der Fließfähigkeit verbunden, was für viele (Spritzguss-) Anwendungen unvorteilhaft ist.

Der vorliegenden Erfindung lag daher die Aufgabe zugrunde, Polyesterformmassen mit mindestens 50 Gew.-% Alkylenterephthalat-Einheiten zur Verfügung zu stellen, die eine verringerte TOC (total organic carbon) Emission aufweisen und stabiler gegen Zersetzung bei der Verarbeitung sind. Ebenso ist ein Molekulargewichtsaufbau bei der Verarbeitung unerwünscht.

Demgemäß wurden die eingangs definierten Formmassen gefunden. Bevorzugte Ausführungsformen sind den Unteransprüchen zu entnehmen.

Als Komponente (A) enthalten die erfindungsgemäßen Formmassen 30 bis 99,99, bevorzugt 35 bis 99 und insbesondere 35 bis 85 Gew.-% eines thermoplastischen Polyesters, aufgebaut aus 50 bis 100, insbesondere 60 bis 100 Gew.-% eines Polyalkylenterephthalates A1) (bezogen auf 100 Gew.-% A) und 0 bis 50, vorzugsweise 0 bis 40 Gew.-% eines Polyesters A2) - verschieden von A1).

Unter diesem Mengenanteil sollen sowohl Blends von Polyalkylenterephthalaten mit Polyestern verstanden werden als auch Co-Polyester, welche zu mindestens 50 Gew.-% Alkylenterephthalateinheiten aufweisen.

Eine erste Gruppe bevorzugter Polyester A1) sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Ein Teil der Terephthalsäure, bis zu 30 mol-%, kann beispielsweise durch 2,6-Naphthalindicarbonsäure, oder Isophthalsäure oder deren Mischungen ersetzt werden. Bis zu 70 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoff-atomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Besonders bevorzugte Polyalkylenterephthalate leiten sich von Alkandiolen mit 2 bis 6 C-Atomen ab. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628).

Insbesondere bevorzugt sind solche, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Polyalkylenterephthalate werden mit Ti-Katalysatoren hergestellt. Diese weisen nach der Polymerisation einen restlichen Ti-Gehalt von kleiner/gleich 250, insbesondere kleiner 200, besonders bevorzugt kleiner 150 ppm auf.

Als weitere Gruppe sind voll aromatische Polyester zu nennen, die sich von aromatischen Dicarbonsäuren und aromatischen Dihydroxyverbindungen ableiten und in Mischung oder Bestandteil der Wiederholungseinheiten mit den Polyalkylenterephthalaten vorliegen können.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 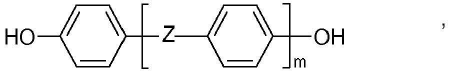 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel 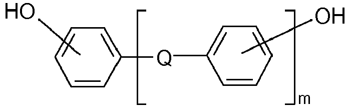 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten haben wie C₁- bis C₆-Alkyl oder C₁- bis C₆-Alkoxy.
Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.
Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.
Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente B) enthalten die erfindungsgemäßen Formmassen 0,01 bis 2, vorzugsweise 0,05 bis 1,5 und insbesondere 0,1 bis 1 Gew.-% eines Acrylsäurepolymeren.

Diese sind aufgebaut aus
B1) 70 bis 100 Gew.-%, vorzugsweise von 85 bis 100 Gew.-% Acrylsäure,
B2) 0 bis 30, vorzugsweise bis zu 15 Gew.-% mindestens eines anderen mit Acrylsäure copolymerisierbaren ethylenisch ungesättigten Monomeren, ausgewählt aus der Gruppe der monoethylemisch ungesättigten Carbonsäuren,
wobei die Summe der Gewichtsprozente B1) und B2) 100 % ergibt.

Bevorzugte geeignete Monomere für Copolymerisate sind monoethylenisch ungesättigte Carbonsäuren wie Methacrylsäure, Maleinsäure, Fumarsäure, Itaconsäure, Mesaconsäure, Methylenmalonsäure und Citraconsäure oder deren Mischungen..

Ebenso können die oben genannten Säuregruppen enthaltenden Monomeren in Form der freien Säuren oder als Salze, z.B. der Natrium-, Kalium- oder Ammoniumsalze bei der Polymerisation eingesetzt werden.

Im Allgemeinen beträgt das Molekulargewicht der erfindungsgemäßen Acrylsäurepolymeren 1000 bis 100 000 g/mol (M_{w} = gewichtsmittleres Molekulargewicht).

Bevorzugt beträgt das gewichtsmittlere Molekulargewicht des Acrylsäure-Polymers 1000 bis 12 000 g/mol, bevorzugt 1500 bis 8000 g/mol und besonders bevorzugt 3500 bis 6500 g/mol.
Das Molekulargewicht kann innerhalb dieser Bereiche gezielt durch die verwendete Regler-Menge eingestellt werden.
Der Anteil von Polymeren mit einem Molekulargewicht von < 1000 g/mol beträgt im Allgemeinen ≤ 10 Gew.-%, bevorzugt ≤ 5 Gew.-%, bezogen auf das gesamte Polymer.

Die Molekulargewichte werden mittels GPC an auf pH 7 gepufferten wässrigen Lösungen der Polymere unter Verwendung von Hydroxyethylmethacrylat-Copolymer-Netzwerk als stationärer Phase und von Natriumpolyacrylat-Standards ermittelt.

Im Allgemeinen beträgt der Polydispersitätsindex des Acrylsäure-Polymers M_{w} / Mₙ ≤ 2,5, bevorzugt 1,5 bis 2,5, beispielsweise 2.

Die K-Werte, bestimmt nach der Fikentscher-Methode an einer 1 gew.-%igen Lösung in VE-Wasser, betragen im Allgemeinen von 10 bis 50, bevorzugt von 15 bis 35 und besonders bevorzugt von 20 bis 30.

Um niedermolekulare Polyacrylsäuren herzustellen, werden Molekulargewichtsregler bzw. Kettenüberträger während der radikalischen Polymerisation von Acrylsäure zugesetzt. Diese Regler müssen auf den Polymerisationsinitiator sowie auf den Polymerisationsprozess abgestimmt sein. Bekannte Initiatoren sind beispielsweise anorganische und organische Perverbindungen, wie Peroxodisulfate, Peroxide, Hydroperoxide und Perester, Azoverbindungen wie 2,2'-Azobisisobutyronitril und Redoxsysteme mit anorganischen und organischen Komponenten. Als Regler werden häufig anorganische Schwefelverbindungen wie Hydrogensulfite, Disulfite und Dithionite, organische Sulfide, Sulfoxide, Sulfone und Mercaptoverbindungen wie Mercaptoethanol, Mercaptoessigsäure sowie anorganische Phosphorverbindungen wie Hypophosphorige Säure (Phosphinsäure) und ihre Salze (z.B. Natriumhypophosphit) eingesetzt.

Verfahren zur Herstellung derartiger Acrylsäurepolymeren sind beispielsweise aus der DE-A 19950941, WO-A 2012/104401 bekannt.

Insbesondere bevorzugte Acrylsäurepolymere weisen einen pH-Wert kleiner 4, insbesondere kleiner 3 auf, d.h. die eingesetzten Acrylsäurepolymere sind vorzugsweise nur teilweise oder gar nicht neutralisiert, d.h. entweder sind freie Säuregruppen oder nur teilweise mit Alkaliionen neutralisierte Säuregruppen vorhanden.

Als Komponente C) können die erfindungsgemäßen Formmassen 0 bis 70, insbesondere bis zu 50 Gew.-% weiterer Zusatzstoffe und Verarbeitungshilfsmittel enthalten, welche verschieden von B) und/oder A) sind, bezogen auf 100 Gew.% A), B) und C).

Übliche Zusatzstoffe C) sind beispielsweise in Mengen bis zu 40, vorzugsweise bis zu 15 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.
Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomere vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Mono-merengemisch in den Kautschuk eingebaut

R¹C(COOR²)=C(COOR³)R⁴ (I)

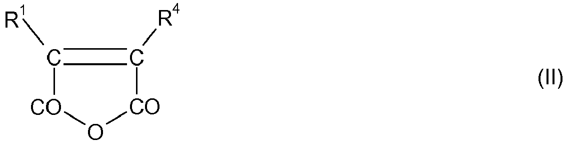

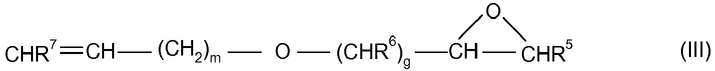

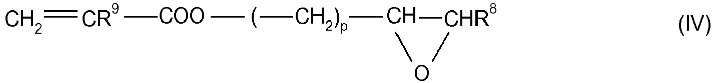

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis
20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
50 bis 98, insbesondere 55 bis 95 Gew.-% Ethylen,
0,1 bis 40, insbesondere 0,3 bis 20 Gew.-% Glycidylacrylat und/oder Glycidylmethacrylat, (Meth)acrylsäure und/oder Maleinsäureanhydrid, und
1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 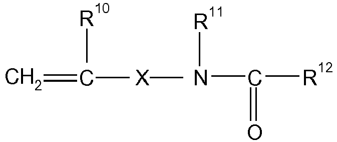 eingeführt werden können,
wobei die Substituenten folgende Bedeutung haben können:
R¹⁰ Wasserstoff oder eine C₁- bis C₄-Alkylgruppe,
R¹¹ Wasserstoff, eine C₁- bis C₈-Alkylgruppe oder eine Arylgruppe, insbesondere Phenyl,
R¹² Wasserstoff, eine C₁- bis C₁₀-Alkyl-, eine C₆- bis C₁₂-Arylgruppe oder -OR¹³
R¹³ eine C₁- bis C₈-Alkyl- oder C₆- bis C₁₂-Arylgruppe, die gegebenenfalls mit O- oder N-haltigen Gruppen substituiert sein können,
X eine chemische Bindung, eine C₁- bis C₁₀-Alkylen- oder C₆-C₁₂-Arylengruppe
   oder 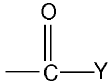
Y O-Z oder NH-Z und
Z eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethyl-acrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe C) seien Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Faserförmige Füllstoffe C) werden in Mengen bis zu 60 Gew.-%, insbesondere bis zu 35 Gew.-% eingesetzt, teilchenförmige Füllstoffe werden in Mengen bis zu 30 Gew%, insbesondere bis zu 10 Gew% eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Stark laserabsorbierende Füllstoffe wie beispielsweise Kohlenstofffasern, Russ, Graphit, Graphen oder Kohlenstoffnanoröhrchen werden bevorzugt in Mengen unter 1 Gew.-%, besonders bevorzugt unter 0,05 Gew.-% eingesetzt.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂-, 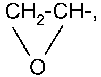 HO-,
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,1 bis 1,5 und insbesondere 0,2 bis 0,5 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1722984 B1, EP 1353986 B1 oder DE 10054859 A1 genannt.

Weiterhin bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt (z.B. Auftragen, oder Auftrommeln der Komponente B) auf das Granulat) werden und dann die restlichen Ausgangsstoffe einzeln und/oder ebenfalls gemischt hinzugegeben werden. Die Mischtemperaturen liegen in der Regel bei 230 bis 290°C. Vorzugsweise kann Komponente B) auch hot feed oder direkt in den Einzug des Extruders zugegeben werden.

Nach einer weiteren bevorzugten Arbeitsweise können die Komponenten B) sowie gegebenenfalls C) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

In einer weiteren bevorzugten Herstellungsmethode wird zunächst ein Batch (Konzentrat) aus A) und B) hergestellt, wobei die Komponente B bis zu 20 Gew.-%, vorzugsweise bis zu 10 Gew.-% in A) (bezogen auf A) + B)) eingearbeitet wird. Dieses Konzentrat wird bei der Herstellung der Rohr- oder Profilextrudate zum Polyester (ohne Zusatzstoffe) als Granulat zudosiert, oder im entsprechenden Mengenverhältnis, z.B. im Taumelmischer vorgemischt, konfektioniert und als Formteil extrudiert.

Die erfindungsgemäßen Formmassen oder Formkörper weisen eine verringerte TOC Emission auf, vorzugsweise kleiner/gleich 100, insbesondere kleiner/gleich 80 und ganz besonders bevorzugt kleiner/gleich 65 ppm auf (gemäß VDA 277).

### Beispiele für Anwendungen und Formteile sind:

### Formteile: Tiefgezogene oder spritzgegossene Kavitäten und Formteile

Kosmetikverpackungen: Lippenstifte und Schminkstifte, Verpackungen für Hautcremes, Haarpflegeprodukte, Zahnpflegeprodukte.

Verpackungen für Medikamente, Injektoren, Spritzen, tiefgezogene Verpackungen für Tabletten.

Lebensmittelverpackungen: Kaffeekapseln, Fertiggerichte, Verpackungen, geeignet für die Heißabfüllung und Sterilisation (Fleischerzeugnisse, Marmeladen, Milchprodukte), evtl. mit Mehrfachnutzung.

Bauteile im Kontakt mit Trinkwasser, wie z.B. Bestandteile von Hausinstallationen Bedarfsgegenstände für den Lebensmittelkontakt, wie z.B. Bestecke, Pfannenwender usw.

Bauteile von Küchengeräten im Lebensmittelkontakt, wie z.B. wasserführende Teile von Kaffeemaschinen (Brüheinheiten) Entsafter usw.

### Automobilinnenraum: Kinematiksysteme

### Beispiele

Es wurden folgende Komponenten eingesetzt.
Komponente A Polybutylenterephthalat (PBT) mit einem MVR von 106,7 cm³/g 10 Min. (gemäß ISO 1133 bei 250 °C/2,16 kg) und VZ von 88,4 ml/g (gemäß ISO 1628).
   Der Resttitangehalt betrug 100 ppm.
Komponente B/1 Polyacrylsäure mit mittlerem Molgewicht (M_{w}) von 5000 g/mol (gemäß GPC) als 49 %-ige wässrige Lösung (Sokalan® PA 25 XS der BASF SE)
   pH Wert: 2
   Viskosität: 500 mPas
Komponente B/2 Polyacrylsäure-Maleinsäureanhydrid-Copolymer als 50 %-ige Lösung (Sokalan ® CP 10 S der BASF SE)
   M_{w} 4000 g/mol
   pH Wert: 1,5
   Viskosität: 150 mPas
Komponente B/1V Natriumhypophosphit
Komponente B/2V Epoxyfunktionalisiertes Styrol-Acrylsäure Polymer (Joncryl®ADR-4368)
Komponente C Pentaerythrittetrastearat

Alle Molekulargewichte B1 / B2 wurden mittels GPC ermittelt. Die für GPC verwendeten Bedingungen sind wie folgt: 2 Säulen (Suprema Linear M) und eine Vorsäule (Suprema Vorsäule), alle der Marke Suprema-Gel (HEMA) von der Firma Polymer Standard Sevices (Mainz Deutschland) wurde bei 35 °C mit einer Flussrate von 0,8 ml/min betrieben. Als Eluent wurde die mit TRIS bei pH 7 gepufferte wässrige Lösung, die mit 0,15 M NaCl und 0,01 M NaN₃ versetzt waren, eingesetzt. Die Kalibrierung erfolgte mit einem Na-PAA Standard, deren integrale Molekulargewichtsverteilungskurve durch SEC-Laserlichtstreukopplung bestimmt worden war, nach dem Kalibrierverfahren von M.J.R. Cantow u.a. (J. Polym. Sci., A-1,5 (1967) 1391-1394), allerdings ohne die dort vorgeschlagene Konzentrationskorrektur. Alle Proben wurden mit einer 50 gew.-%igen Natronlauge auf pH 7 gestellt. Ein Teil der Lösung wurde mit VE-Wasser auf einen Feststoffgehalt von 1,5 mg/ml verdünnt und 12 Stunden lang gerührt. Anschließend wurden die Proben filtriert und 100 µl wurde durch eine Sartorius Minisart RC (0.2 µm) eingespritzt.

Komponente A wurde mit verschiedenen Additiven in einem Doppelschnecken-Extruder bei einer Schmelzetemperatur von 265-275 °C, einem Durchsatz von 5 kg/h und einer Drehzahl von 300 min⁻¹ extrudiert. Die Dosierung der Additive (in wässriger Lösung) erfolgte mit dem Granulat im Kalteinzug. Die in der Tabelle angegebenen Gewichtsprozente beziehen sich auf das reine Additiv B ohne Lösungsmittel.

Das extrudierte Material wurde anschließend zu Plättchen der Abmessungen 60 x 60 x 0,5 mm verspritzt.

### Analyse der Emissionsmenge:

Die Analyse der Emissionsmenge erfolgte nach VDA 277, einem Standardverfahren des Verbands der Automobilindustrie zur Bestimmung der TOC (= totale organic carbon emission). Bei der VDA 277 werden nichtmetallische Kfz-Werkstoffe hinsichtlich ihrer Kohlenstoff-Emission untersucht. Dabei werden die spritzgegossenen Plättchen oder das Granulat nach der Konfektionierung zerkleinert und in ein Glasgefäß gegeben, das versiegelt wird. Anschließend wird die Probe für 5 Stunden bei 120 °C gelagert. Daraufhin wird das Gasvolumen oberhalb der Probe im Gaschromatographen analysiert (Headspace-GC). Die Emission wird dabei in µg Kohlenstoff (TOC) pro Gramm Probe ermittelt.

Die Zusammensetzungen der Formmassen und die Ergebnisse der Messungen sind den Tabellen zu entnehmen.

**Tabelle 1a**

| | V/1 | Vergleichsbeispiel 2 | Beispiel 1 | Beispiel 2 |
|---|---|---|---|---|
| | [Gew.-%] | [Gew.-%] | [Gew.-%] | [Gew.-%] |
| A | 99,35 | 98,85 | 99,05 | 98,85 |
| C | 0,65 | 0,65 | 0,65 | 0,65 |
| B/1V | - | 0,5 | - | - |
| B/1 | - | - | 0,3 | - |
| B/2 | - | - | - | 0,5 |

**Tabelle1b**

| Zusammensetzung | TOC¹⁾ nach VDA 277 [ppm] | TOC²⁾ [ppm] | VZ [ml/g] |
|---|---|---|---|
| V/1 | 239 | - | - |
| V/2 | 128 | - | - |
| Beispiel 1 | 46 | - | 87 |
| Beispiel 2 | 54 | 19 | 88 |

| | | | |
|---|---|---|---|
| ¹⁾ am Probekörper ²⁾ am Granulat | | | |

**Tabelle 2**

| Zusammensetzung [Gew.-%] | V3 | V4 | V5 | V6 |
|---|---|---|---|---|
| A | 100 | 99,8 | 99,5 | 98 |
| B/2V | - | 0,2 | 0,5 | 2 |
| TOC²⁾ [ppm] | 114 | 74 | 71 | 98 |
| VZ [ml/g] | 89 | 91 | 99 | 115 |

## Patentansprüche

1. Thermoplastische Formmassen, enthaltend
| | |
|---|---|
| A) 30 bis 99,99 Gew.-% | eines Polyesters, aufgebaut aus 50 bis 100 Gew.-% mindestens eines Polyalkylenterephthalates A1), bezogen auf A) und 0 bis 50 Gew.-% eines Polyesters A2), verschieden von A1, |
| B) 0,01 bis 2 Gew.-% | eines Acrylsäurepolymeren, aufgebaut aus |
| | |
| B1) 70 bis 100 Gew.-% | Acrylsäure |
| B2) 0 bis 30 Gew.-% | mindestens eines anderen mit Acrylsäure copolymerisierbaren ethylenisch ungesättigten Monomeren, ausgewählt aus der Gruppe der monoethylenisch ungesättigten Carbonsäuren, |
| | |
| C) 0 bis 70 Gew.-% | weiterer Zusatzstoffe, |
wobei die Summe der Gewichtsprozente der Komponenten A) bis C) 100 % ergibt.

2. Thermoplastische Formmassen nach Anspruch 1, wobei die Komponente B) einen pH-Wert kleiner 4 aufweist.

3. Thermoplastische Formmassen nach den Ansprüchen 1 oder 2, wobei die Komponente B) ein mittleres Molekulargewicht M_{w} von 1000 bis 12 000 g/mol aufweist.

4. Thermoplastische Formmassen nach den Ansprüchen 1 bis 3, wobei die Komponente B) aufgebaut ist aus
B1) 85 bis 100 Gew.-% Acrylsäure
B2) 0 bis 15 Gew.-% copolymerisierbaren Monomeren gemäß Anspruch 1

5. Thermoplastische Formmassen nach den Ansprüchen 1 bis 4, in denen die Comonomeren ausgewählt sind aus der Gruppe Methacrylsäure, Maleinsäure, Fumarsäure, Citraconsäure, Mesaconsäure oder deren Mischungen.

6. Thermoplastische Formmassen nach Anspruch 1, wobei bei dem Polyalkylenterephtalat A1) bis zu 70 mol-% der aromatischen Dicarbonsäuren durch aliphatische oder cycloaliphatische Dicarbonsäuren ersetzt sind.

7. Verwendung von Acrylsäurepolymeren B) zur Verringerung der TOC (total organic carbon) Emission von Polyestern A) gemäß Anspruch 1.

8. Polyesterformmassen nach den Ansprüchen 1 bis 6, mit einer TOC Emission von kleiner/gleich 100 ppm (gemäß VDA 277).

9. Verwendung von Polyesterformmassen gemäß den Ansprüchen 1 bis 6 und 8 zur Herstellung von Fasern, Folien und Formkörpern.

10. Fasern, Folien, Formkörper erhältlich gemäß den Ansprüchen 1 bis 8 mit einer TOC Emission von kleiner//gleich 100 ppm (gemäß VDA 277).

11. Formkörper jeglicher Art gemäß Anspruch 10, welche bei Lebensmitteln, Kosmetikprodukten, Medikamenten, Trinkwasseranwendungen, im Kfz-Innenraum oder für Kinematiksystemen eingesetzt werden.

## Claims

1. A thermoplastic molding composition comprising
| | |
|---|---|
| A) from 30 to 99.99% by weight | of a polyester composed of from 50 to 100% by weight of at least one polyalkylene terephthalate A1), based on A), and from 0 to 50% by weight of a polyester A2), differing from A1), |
| B) from 0.01 to 2% by weight | of an acrylic acid polymer composed of |
| B1) from 70 to 100% by weight | of acrylic acid |
| B2) from 0 to 30% by weight | by weight of at least one other ethylenically unsaturated monomer copolymerizable with acrylic acid, selected from the group of the monoethylenically unsaturated carboxylic acids, and |
| C) from 0 to 70% by weight | of other additional substances, |
where the total of the percentages by weight of components A) to C) is 100%. where the total of the percentages by weight of components A) to C) is 100%.

2. The thermoplastic molding composition according to claim 1, where the pH of component B) is less than 4.

3. The thermoplastic molding composition according to claim 1 or 2, where the average molar mass M_{w} of component B) is from 1000 to 12 000 g/mol.

4. The thermoplastic molding composition according to claims 1 to 3, where component B) is composed of B1) from 85 to 100% by weight of acrylic acid B2) from 0 to 15% by weight of copolymerizable monomers according to claim 1.

5. The thermoplastic molding composition according to claims 1 to 4, in which the comonomers are selected from the group of methacrylic acid, maleic acid, fumaric acid, citraconic acid, mesaconic acid, and mixtures thereof.

6. The thermoplastic molding composition according to claim 1, where, in the case of polyalkylene terephthalate A1), up to 70 mol% of the aromatic dicarboxylic acids are replaced with aliphatic or cycloaliphatic dicarboxylic acids.

7. The use of acrylic acid polymers B) to reduce the TOC (total organic carbon) emission of polyesters A) according to claim 1.

8. A polyester molding composition according to claims 1 to 6 with TOC emission less than or equal to 100 ppm (in accordance with VDA 277).

9. The use of polyester molding compositions according to claims 1 to 6 and 8 for the production of fibers, foils, and moldings.

10. A fiber, a foil, or a molding obtainable according to claims 1 to 8 with TOC emission less than or equal to 100 ppm (in accordance with VDA 277).

11. A molding of any type according to claim 10, used for food or drink, cosmetics products, medicaments, drinking-water applications, in motor-vehicle interiors, or for kinematic systems.

## Revendications

1. Matériaux de moulage thermoplastiques, contenant :
A) 30 à 99,99 % en poids d'un polyester constitué par 50 à 100 % en poids d'au moins un polyalkylène téréphtalate A1), par rapport à A), et 0 à 50 % en poids d'un polyester A2), différent de A1,
B) 0,01 à 2 % en poids d'un polymère d'acide acrylique, constitué par
B1) 70 à 100 % en poids d'acide acrylique,
B2) 0 à 30 % en poids d'au moins un autre monomère éthyléniquement insaturé copolymérisable avec l'acide acrylique, choisi dans le groupe des acides carboxyliques monoéthyléniquement insaturés,
C) 0 à 70 % en poids d'autres additifs,
la somme des pourcentages en poids des composants A) à C) étant de 100 %.

2. Matériaux de moulage thermoplastiques selon la revendication 1, dans lesquels le composant B) présente un pH inférieur à 4.

3. Matériaux de moulage thermoplastiques selon les revendications 1 ou 2, dans lesquels le composant B) présente un poids moléculaire moyen M_{w} de 1 000 à 12 000 g/mol.

4. Matériaux de moulage thermoplastiques selon les revendications 1 à 3, dans lesquels le composant B) est constitué par :
B1) 85 à 100 % en poids d'acide acrylique,
B2) 0 à 15 % en poids de monomères copolymérisables selon la revendication 1.

5. Matériaux de moulage thermoplastiques selon les revendications 1 à 4, dans lesquels les comonomères sont choisis dans le groupe constitué par l'acide méthacrylique, l'acide maléique, l'acide fumarique, l'acide citraconique, l'acide mésaconique ou leurs mélanges.

6. Matériaux de moulage thermoplastiques selon la revendication 1, dans lesquels, dans le cas de polyalkylène téréphtalate A1), jusqu'à 70% en mole des acides dicarboxyliques aromatiques sont remplacés par des acides dicarboxyliques aliphatiques ou cycloaliphatiques.

7. Utilisation de polymères de l'acide acrylique B) pour réduire l'émission de TOC (total organic carbon) de polyesters A) selon la revendication 1.

8. Matériaux de moulage à base de polyester selon les revendications 1 à 6, ayant une émission de TOC inférieure ou égale à 100 ppm (selon VDA 277).

9. Matériaux de moulage à base de polyester selon les revendications 1 à 6 et 8 pour la fabrication de fibres, de feuilles et de corps moulés.

10. Fibres, feuilles, corps moulés pouvant être obtenus selon les revendications 1 à 8, ayant une émission de TOC inférieure ou égale à 100 ppm (selon VDA 277).

11. Corps moulés de tout type selon la revendication 10, qui sont utilisés pour des produits alimentaires, des produits cosmétiques, des médicaments, des applications liées à l'eau potable, dans l'espace intérieur d'automobiles ou pour des systèmes cinématiques.
